# EUROPÄISCHE PATENTSCHRIFT

(11) **EP 1 477 268 B1**
(45) Veröffentlichungstag und Bekanntmachung des Hinweises auf die Patenterteilung: **25.05.2011**
(21) Anmeldenummer: 04008396.6
(22) Anmeldetag: 07.04.2004
(51) Int. Cl.: B23Q 3/10, B23Q 1/58, B23Q 16/04

(54) **Vorrichtung zur Halterung zu vermessender oder zu bearbeitender Werkstücke**
Device for holding workpieces which have to be machined or measured
Dispositif de maintien de pièces à usiner ou mesurer

(30) Priorität: 02.05.2003 DE 20306963 U
(43) Veröffentlichungstag der Anmeldung: 17.11.2004
(73) Patentinhaber: Junker & Partner GmbH, 66636 Tholey (DE)
(72) Erfinder: Junker, Franz-Rudolf, 66636 Tholey-Sotzweiler (DE); Huber, Alfred, 66571 Eppelborn (DE)
(74) Vertreter: Bernhardt, Reinold

(56) Entgegenhaltungen:
- EP-A2- 0 157 451
- AU-A- 2 308 684
- DE-U- 7 408 641
- FR-A- 2 426 854
- US-A- 3 804 355
- US-A- 4 804 162

## Beschreibung

Die Erfindung betrifft eine Vorrichtung zur Halterung eines zu vermessenden Fahrzeugkarosserieteils in einer Referenzposition, mit einer Vielzahl das Karosserieteil an verschiedenen Stellen abstützender Aufnahmesitze.

Eine solche Vorrichtung ist z.B. aus der DE 299 11 395 U1 bekannt. Mehrere Aufnahmesitze sind in unterschiedlichen Positionen, die Sollmaße eines aufzunehmenden Werkstücks entsprechend angeordnet, so dass sich das Werkstück in einer definierten Lage befindet und mit Hilfe von Messtastern vermessen werden kann.

Aus der US 4,804,162 ist ein fahrbarer Träger für einen Fahrzeugmotor bekannt, der vertikal verstellbare Aufnahmesitze zur Anpassung an unterschiedliche Motoren aufweist.
Die EP 0 157 451 A2 beschreibt eine Trägervorrichtung für Leiterplatten, welche der Halterung der Leiterplatten in einer Bestückungsposition dient.

Die Halterungsvorrichtung umfasst am Rand der Leiterplatten angreifende, mit vorstehenden Stiften in Löchern in der Leiterplatte eingreifende Halterungspfosten. Zur Anpassung an unterschiedliche Leiterplatten können die Halterungspfosten teilweise in eine Parkposition abgesenkt und auf einer Grundplatte weitere, gegen die Leiterplatte von unten anliegende Haltesitze angeordnet werden.

Der vorliegenden Erfindung liegt die Aufgabe zugrunde, die Nutzungsmöglichkeiten solcher Vorrichtungen zu erweitern.

Die diese Aufgabe lösende Vorrichtung nach der Erfindung ist dadurch gekennzeichnet, dass einer oder mehrere der Aufnahmesitze durch Verschiebung oder/und Verschwenkung aus einer Aufnahmeposition in eine von der Aufnahmeposition entfernte Parkposition oder/und mindestens eine weitere Aufnahmeposition überführbar ist bzw. sind, wobei jeweils ein Sitzhalter mit einem teleskopartig ein- und ausfahrbaren oder/und verschwenkbaren Verbindungsstück für die Verbindung des Sitzhalters mit einem den Aufnahmesitz bildenden Teil und mindestens eine Bohrung-Stift-Passung zur genauen Anordnung des Verbindungsstücks entsprechend der Aufnahmeposition bzw. weiteren Aufnahmeposition vorgesehen sind, wobei das Verbindungsstück beim teleskopartigen Ein- und Ausfahren gegen Drehung um eine zur Fahrtrichtung parallele Rundzylinderachse des Verbindungsstücks gesichert ist.

Eine solche Halterungsvorrichtung nach der Erfindung lässt sich variabel z.B. für Werkstücke einsetzen, die sich nicht wesentlich sondern nur in Details unterscheiden. Ein durch einen solchen Detailunterschied betroffener Sitz, der an dieser Stelle nicht mehr benötigt wird, kann in der Parkposition an Ort und Stelle verfügbar bleiben und lässt sich bei Bedarf mit geringem Aufwand wieder in die Aufnahmeposition zurückführen. Auch durch Überführung eines Aufnahmesitzes in eine weitere Aufnahmeposition kann eine Anpassung der Vorrichtung an unterschiedliche Werkstücke erfolgen.

Zur genauen Positionierung des Verbindungsstücks ist zweckmäßig eine Bohrung-Stift-Passung vorgesehen, wobei das Verbindungsstück ggf. allein durch diese Passung in der Aufnahmeposition fixierbar ist. Auf dem Sitzhalter kann ein den Sitz bildender Trägerkopf befestigt sein, welcher als solcher justierbar ist und Einrichtungen zur Verstellung der Sitzposition aufweist.

Vorzugsweise ist der Sitzhalter gegen die Rückstellkraft einer Feder in die Parkposition oder/und weitere Aufnahmepositionen bewegbar, wobei durch die Rückstellkraft eine selbsttätige Rückbewegung in die Ausgangsstellung ermöglicht werden kann. Andererseits könnte eine Feder auch nur zur Dämpfung einer Verstellbewegung dienen.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: ein erstes Ausführungsbeispiel für einen in einer Vorrichtung nach der Erfindung verwendbaren Sitzhalter in einer teilweise geschnittenen Seitenansicht,
- Fig. 2: den Sitzhalter von Fig. 1 in einer Draufsicht,
- Fig. 3: ein zweites Ausführungsbeispiel für einen in einer Vorrichtung nach der Erfin- dung verwendbaren Sitzhalter in einer teilweise geschnittenen Seitenansicht,
- Fig. 4: den Sitzhalter von Fig. 3 in einer teilweise geschnittenen Seitenansicht, die gegenüber der Ansicht von Fig. 3 um 90° gedreht ist,
- Fig. 5: den Sitzhalter von Fig. 3 in einer Draufsicht,
- Fig. 6: ein drittes Ausführungsbeispiel für einen in einer Vorrichtung nach der Erfin- dung verwendbaren Sitzhalter in einer geschnittenen Draufsicht,
- Fig. 7: den Sitzhalter von Fig. 6 in einer Seitenansicht,
- Fig. 8: den Sitzhalter von Fig. 6 in einer geschnittenen, gegenüber der Seitenansicht von Fig. 7 um 90° gedrehten Seitenansicht, und
- Fig. 9: eine herkömmliche Vorrichtung zur Halterung zu vermessender oder zu verarbeitender Werkstücke, in welcher Sitzhalter gemäß Fig. 1 bis 8 verwendbar sind.

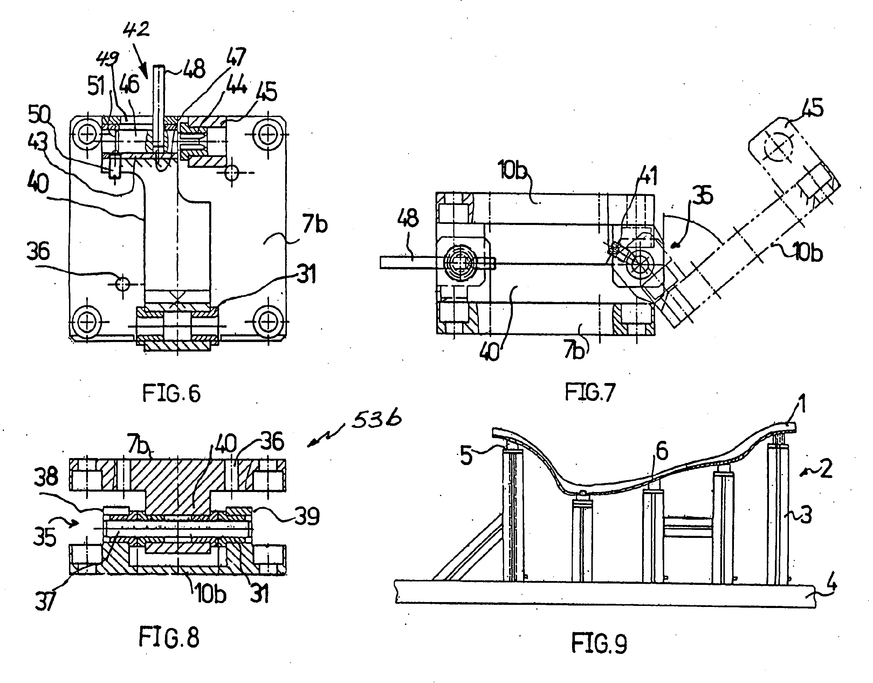

Es wird zunächst auf Fig. 9 Bezug genommen, wo mit dem Bezugszeichen 1 ein zu vermessendes Blechteil bezeichnet ist. Das geformte Blechteil 1 liegt auf einer Haltevorrichtung 2 auf, welche vertikale Trägersäulen 3 aufweist, die von einer Basisplatte 4 vorstehen.

Auf den durch ein Vierkantprofil gebildeten Trägersäulen 3 ist jeweils ein Trägerkopf 5 befestigt, welcher einen Aufnahmesitz 6 mit einer an der betreffenden Stelle an die Form des Blechteils 1 angepassten Anlagefläche umfasst.

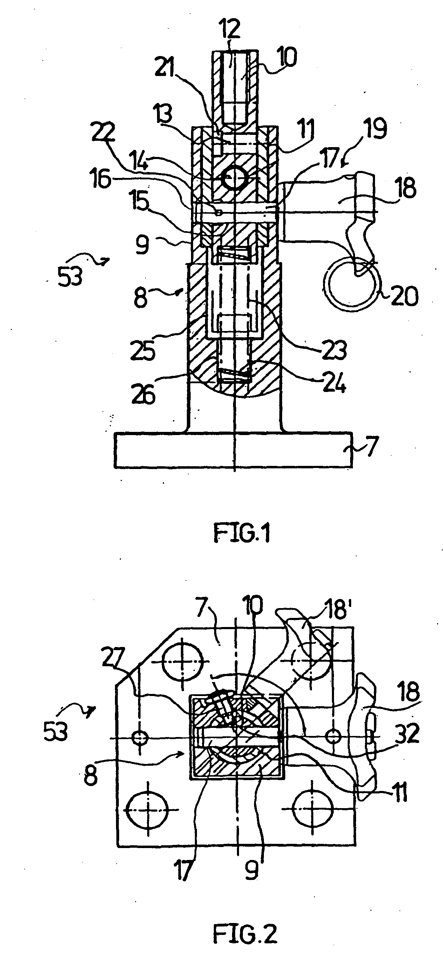

In der vorangehend beschriebenen Vorrichtung lässt sich ein in Fig. 1 gezeigter Sitzhalter 53 mit einer Basisplatte 7 und einer auf der Basisplatte 7 senkrecht stehenden Trägersäule 8 verwenden.

Die Trägersäule 8 besteht aus einem einstückig mit der Basisplatte 7 verbundenen, im Querschnitt quadratischen Hülsenteil 9 und einem in dem Hülsenteil 9 axial bewegbaren Verbindungsstück 10 für eine Schraubverbindung mit einem nicht gezeigten Trägerkopf, welcher einen Aufnahmesitz für ein Werkstück bildet. Der Schraubverbindung mit dem Trägerkopf dient eine axiale Bohrung 12.

Das Verbindungsstück 10 ist in einer in den Hülsenteil 9 eingesetzten Buchse 11 geführt.

Neben der Längsbohrung 12 weist das Verbindungsstück 10 drei Querbohrungen 13 bis 15 auf. Die Querbohrungen 13 und 15 lassen sich durch Verschieben des Verbindungsstücks 10 in der Buchse 11 zu einer Querbohrung 16 in der Buchse 11 und dem Hülsenteil 9 ausrichten. Die Querbohrung 14 steht (abweichend von der Darstellung in Fig. 1) zu den übrigen Querbohrungen 13 und 15 im Verbindungsstück 10 im Winkel von 45° und ist zu einer entsprechend angeordneten Querbohrung 52 in der Buchse 11 und dem Hülsenteil 9 ausrichtbar.

In die Querbohrung 16 und wahlweise in eine der zwei Querbohrungen 13 und 15 bzw. die Querbohrung 14 und die Querbohrung 52 lässt sich ein Passstift 17 einführen, welcher mit einem Knauf 18 verbunden ist. Passstift 17 und Knauf 18 bilden ein Steckerteil 19, an dem ein Schlüsselring 20 angebracht ist.

Die Querbohrungen 13 bis 15 weisen an einem Ende jeweils eine Einsenkung 21 auf. In einen durch die Einsenkung 21 gebildeten Ringraum rastet eine von dem Passstift 17 vorstehende, im Passstift gegen die Kraft einer Feder versenkbare Nase 22 ein.

Koaxial zu einem verjüngten Endstück 23 des Verbindungsstücks 10 ist eine Schraubenfeder 24 angeordnet, welche mit einem Ende gegen eine am Verbindungsstück 10 gebildete Ringschulter und mit dem anderen Ende gegen den Boden eines im Durchmesser verringerten Endabschnitts 26 einer Längsbohrung 25 im Hülsenteil 9 anliegt.

In Fig. 2 ist eine Schraube 27 sichtbar, welche in eine Längsnut 32 am Verbindungsstück 10 eingreift und der Sicherung des Verbindungsstücks gegen Drehung dient.

Ein bei 18' angedeuteter Knauf deutet an, dass der Steckerteil 19 in die Querbohrung 14 und die Querbohrung 52 im Hülsenteil 9 und der Buchse 11 eingesteckt ist.

Der vorangehend beschriebene Sitzhalter 53 lässt sich mit seinem Fußteil 7 auf einer Trägersäule 3 einer Vorrichtung, wie sie in Fig. 9 gezeigt ist, aufsetzen und mit Hilfe der Längsbohrung 12 an dem Verbindungsstück 10 ein Trägerkopf mit einem Sitz für ein Werkstück anbringen.

In dem Zustand von Fig. 1, in welchem der Passstift 17 in die Passbohrung 15 eingesetzt ist, befindet sich der Aufnahmesitz am Trägerkopf in einer ersten Aufnahmeposition.

Durch Einfahren des Verbindungsstücks 10 gegen die Rückstellkraft der Schraubenfeder 24 lässt sich die zweite Passbohrung 14 nutzen, um eine zweite Aufnahmeposition zu bilden, in der die Trägervorrichtung ein anderes Werkstück aufnehmen kann. Z.B. ist diese zweite Aufnahmeposition nutzbar, um ein Werkstück aufzunehmen, das an der betreffenden Stützstelle die doppelte Blechdicke wie ein vorher gehaltenes Werkstück aufweist. Z.B. Fahrzeugkarosserieteile können sich in solcher Weise voneinander unterscheiden.

Wird der betreffende Trägerkopf innerhalb der Vorrichtung für ein Werkstück nicht benötigt, so kann das Verbindungsstück 10 gegen die Kraft der Feder 24 in die unterste Position gefahren werden, so dass der Aufnahmesitz von dem betreffenden Werkstück weit entfernt in einer Parkposition angeordnet ist. In dieser Position wird der Passstift 17 in die Querbohrung 13 eingesetzt. Abweichend hiervon könnte die letztgenannte Position bei einem anderen Werkstück auch als weitere Aufnahmeposition dienen.

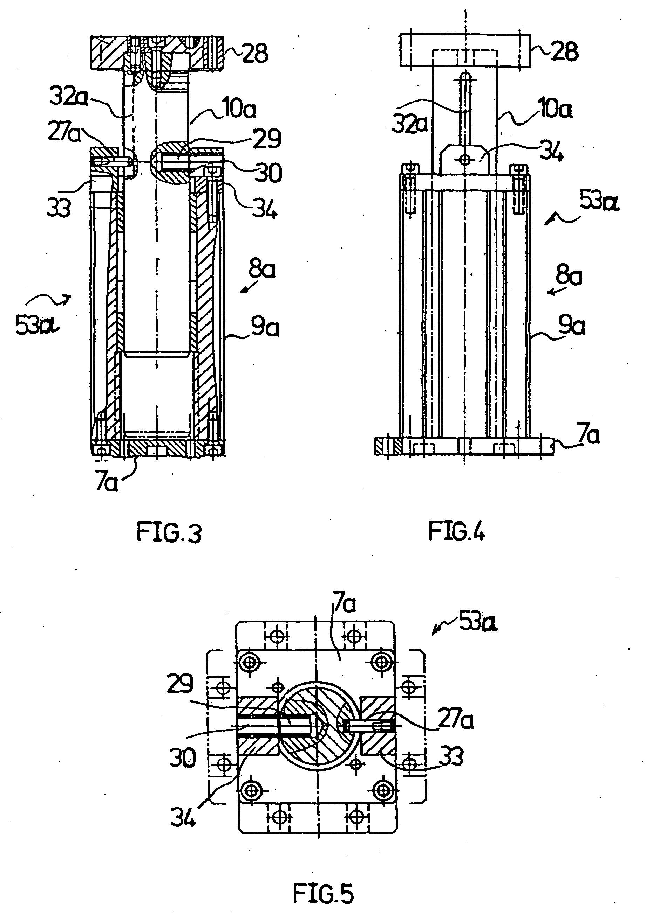

In den nachfolgenden Fig. 3 bis 5 und 6 bis 7 sind gleiche oder gleichwirkende Teile mit derselben Bezugszahl wie in den vorangehenden Figuren bezeichnet, wobei der betreffenden Bezugszahl jeweils der Buchstabe a bzw. b beigefügt ist.

Ein Hülsenteil 9a einer Trägersäule 8a ist in dem betreffenden Ausführungsbeispiel für einen Sitzhalter 53a aus demselben Vierkantprofilmaterial wie die in Fig. 9 gezeigten Trägersäulen 3 gebildet. Über einen Fußteil 7a kann eine Schraubverbindung mit einer solchen Trägersäule an deren Stirnseite hergestellt sein.

Ein teleskopartig in dem Hülsenteil 9a der Trägersäule 8a verfahrbares Verbindungsstück 10a weist eine Trägerplatte 28 für die Aufnahme eines einen Aufnahmesitz bildenden Trägerkopfs (nicht gezeigt) auf. Eine Bohrung 29 in dem Verbindungsteil 10a ist durch Verschiebung des Verbindungsteils zu einer Bohrung 30 ausrichtbar, die in einem am Hülsenteil 9a befestigten Aufsatzstück 34 gebildet ist. Eine in ein Gewinde in einem Aufsatzstück 33 eingedrehte Schraube 27a greift in eine Nut 32a am Hülsenteil 10a ein, so dass eine Drehsicherung gebildet ist.

In die zueinander ausgerichteten Bohrungen 29 und 30 ist in einer Aufnahmeposition für ein Werkstück ein nicht gezeigter Passstift einsetzbar. Durch Entfernen des Passstifts lässt sich der Verbindungsteil 10a in eine Parkposition des Aufnahmesitzes bis zum Boden des Hülsenteils 9a absenken. Die Schraube 27a sorgt bei der Rückführung in die Aufnahmeposition dafür, dass lediglich eine vertikale Ausrichtung der Bohrungen 29 und 30 zueinander erfolgen muß, um den Passstift einführen zu können.

Am Boden des Hülsenteils 9a könnte eine den Aufschlag des Verbindungsstücks 10a dämpfende Feder angeordnet sein.

Das in Fig. 6 bis 8 gezeigte Ausführungsbeispiel für einen Sitzhalter 53b weist eine Basisplatte 7b auf, welche über ein Gelenk 35 mit einem plattenförmigen Verbindungsstück 10b verbunden ist. Mit dem Verbindungsstück 10b lässt sich ein Trägerkopf 5 (Fig. 9) verschrauben, wobei neben der Verschraubung zur genauen Positionierung des Trägerkopfes eine Verstiftung mittels zweier Passbohrungen 36 erfolgen kann.

Das Gelenk 35 weist einen Gelenkstift 37 und vier Buchseneinsätze 31 auf, durch die eine hohe Passgenauigkeit der Gelenkteile und Spielfreiheit des Gelenks ermöglicht werden.

Zwei der Buchseneinsätze 31 sind jeweils in Bohrungen in Gelenkschenkeln 38 und 39 eingesetzt, welche von dem Verbindungsstück 10b vorstehen. Weitere zwei Buchseneinsätze 31 stecken in einer Bohrung, die in einem an der Basisplatte 7b gebildeten Steg 40 gebildet ist.

An dem Gelenk 35 ist ferner eine Schraube 41 vorgesehen, die in eine Ringnut am Gelenkstift 37 eingreift und den Gelenkstift 37 gegen axiale Verschiebung sichert.

Eine Verschlusseinrichtung 42 auf der dem Gelenk 35 gegenüberliegenden Seite der Basisplatte 7b bzw. des Verbindungsstücks 10b weist einen in eine Bohrung im Steg 40 eingeführten Buchseneinsatz 43 sowie einen Buchseneinsatz 44 auf, welcher in einer Bohrung steckt, die in einem mit dem Verbindungsstück 10b verbundenen Ansatz 45 gebildet ist.

Die Buchseneinsätze 43 und 44 durchsetzt ein Passstift 46 mit einer Querbohrung 47, in die ein Stift 48 eingesetzt ist. Der als Griff dienende Stift 48 ragt durch ein im Buchseneinsatz 43 und dem Steg 40 gebildetes Langloch 49 hindurch. Eine Schraube 50 mit einem gegen die Kraft einer inneren Feder versenkbaren Kugelkopf liegt mit dem Kugelkopf gegen eine an dem Passstift 46 gebildete Anfasung 51 an und sichert den Passstift gegen axiale Verschiebung.

Wie Fig. 7 zeigt, lässt sich das Verbindungsstück 10b umklappen und so ein durch das Verbindungsstück 10b gehaltener Aufnahmesitz aus einer Aufnahmeposition in eine Parkposition überführen.

In der Aufnahmeposition sorgen die genau in die Buchseneinsätze 37 bzw. 43 und 44 eingesetzten Passstifte 37 und 46 für eine genaue Positionierung des Aufnahmesitzes.

Zum Lösen der Verschlusseinrichtung 42 zwecks Verschwenken des Verbindungsstücks 10b wird der Passstift 46 mit Hilfe des Griffstiftes 48 axial verschoben und aus dem Eingriff in den Buchseneinsatz 44 gelöst.

## Patentansprüche

1. Vorrichtung zur Halterung eines zu vermessenden Fahrzeugkarosserieteils (1) in einer Referenzposition, mit einer Vielzahl das Karosserieteil (1) an verschiedenen Stellen abstützender Aufnahmesitze,
**dadurch gekennzeichnet,**
**dass** einer oder mehrere der Aufnahmesitze (6) durch Verschiebung oder/und Verschwenkung aus einer Aufnahmeposition in eine von der Aufnahmeposition entfernte Parkposition oder/und mindestens eine weitere Aufnahmeposition überführbar ist bzw. sind, wobei jeweils ein Sitzhalter (53,53a,53b) mit einem teleskopartig ein- und ausfahrbaren oder/und verschwenkbaren Verbindungsstück (10,10a,10b) für die Verbindung des Sitzhalters mit einem den Aufnahmesitz (6) bildenden Teil und mindestens eine Bohrung-Stift-Passung zur genauen Anordnung des Verbindungsstücks (10) entsprechend der Aufnahmeposition bzw. weiteren Aufnahmeposition des Aufnahmesitzes vorgesehen sind,wobei das Verbindungsstück (10,10a) beim teleskopartigen Ein- und Ausfahren gegen Drehung um eine zur Fahrtrichtung parallele Rundzylinderachse gesichert ist.

2. Vorrichtung nach Anspruch 1,
**dadurch gekennzeichnet,**
**dass** das Verbindungsstück (10,10a) durch die Passung in der Aufnahmeposition fixierbar ist.

3. Vorrichtung nach einem der Ansprüche 1 oder 2,
**dadurch gekennzeichnet,**
**dass** das Verbindungsstück (10) mit einem den Sitz bildenden, justierbaren Trägerkopf verbunden ist.

4. Vorrichtung nach einem der Ansprüche 1 bis 3,
**dadurch gekennzeichnet,**
**dass** das Verbindungsstück (10,10a) gegen die Rückstellkraft einer Feder (24) in die Parkposition oder/und eine weitere Aufnahmeposition überführbar ist.

## Claims

1. Device for retaining in a reference position a vehicle body part (1) to be measured, having a multiplicity of holding seats which support the body part (1) at different points,
**characterized**
**in that** one or more of the holding seats (6) can be transferred, by being displaced and/or pivoted, from a holding position into a park position which is remote from the holding position and/or into at least one further holding position, with in each case one seat bracket (53,53a,53b) being provided which has a telescopically retractable and extendable and/or pivotable connecting piece (10,10a,10b) for connecting the seat bracket to a part which forms the holding seat (6), and with at least one bore-pin fit being provided for the precise arrangement of the connecting piece (10) corresponding to the holding position or further holding position of the holding seat, with the connecting piece (10,10a) being prevented, during the telescopic retraction and extension, from rotating about a round cylindrical axle parallel to the direction of travel.

2. Device according to Claim 1,
**characterized**
**in that** the connecting piece (10,10a) can be fixed in the holding position by the fit.

3. Device according to one of Claims 1 and 2,
**characterized**
**in that** the connecting piece (10) is connected to an adjustable support head which forms the seat.

4. Device according to one of Claims 1 to 3,
**characterized**
**in that** the connecting piece (10,10a) can be transferred into the park position and/or a further holding position counter to the restoring force of a spring (24).

## Revendications

1. Dispositif pour le maintien dans une position de référence d'une partie de carrosserie de véhicule (1) à mesurer, comprenant une pluralité de sièges récepteurs qui soutiennent la partie de carrosserie (1) à différents emplacements,
**caractérisé en ce que**
un ou plusieurs des sièges récepteurs (6) est/sont transférable(s) par translation et/ou par pivotement depuis une position de réception jusque dans une position de repos éloignée de la position de réception et/ou dans au moins une autre position de réception, dans lequel un porte-siège (53, 53a, 53b) respectif est pourvu d'une pièce de raccordement (10, 10a, 10b), rétractable et déployable de manière télescopique et/ou capable de pivoter, pour la liaison du porte-siège avec une pièce qui forme le siège récepteur (6) et **en ce qu'**il est prévu au moins un ajustement du type perçage-et-tige pour l'agencement exact de la pièce de liaison (10) en correspondance de la position de réception ou de l'autre position de réception du siège récepteur, et la pièce de liaison (10, 10a) est bloquée, lors de la rétraction et du déploiement télescopique, à l'encontre d'une rotation autour d'un axe de cylindre parallèle à la direction de circulation.

2. Dispositif selon la revendication 1,
**caractérisé en ce que** la pièce de liaison (10, 10a) est susceptible d'être fixée dans la position de réception grâce à l'ajustement.

3. Dispositif selon l'une des revendications 1 ou 2,
**caractérisé en ce que** la pièce de liaison (10) est reliée à une tête porteuse ajustable qui forme le siège.

4. Dispositif selon l'une des revendications 1 à 3,
**caractérisé en ce que** la pièce de liaison (10, 10a) est susceptible d'être transférée vers la position de repos et/ou vers une autre position de réception à l'encontre de la force de rappel d'un ressort (24).
